# EUROPÄISCHE PATENTSCHRIFT

(11) **EP 1 825 924 B1**
(45) Veröffentlichungstag und Bekanntmachung des Hinweises auf die Patenterteilung: **12.11.2008**
(21) Anmeldenummer: 06013070.5
(22) Anmeldetag: 24.06.2006
(51) Int. Cl.: B05C 17/00

(54) **Vorrichtung und Verfahren zum Vermischen einer Binder- und einer Härter-Komponente zur Herstellung einer gebrauchsfertigen Spachtelmasse**
Apparatus and method for mixing a binder and a curing agent to produce a ready for use filler mass.
Appareil et méthode pour mélanger un liant et un durcisseur pour produire un mastic prêt à l'emploi

(30) Priorität: 24.02.2006 WO PCT/EP2006/001710; 10.05.2006 DE 202006007425 U
(43) Veröffentlichungstag der Anmeldung: 29.08.2007
(73) Patentinhaber: VOSSCHEMIE GmbH, 25436 Uetersen (DE)
(72) Erfinder: Voss, Klaus-W., 25436 Uetersen (DE)
(74) Vertreter: Richter, Joachim

(56) Entgegenhaltungen:
- EP-A- 1 570 805
- EP-A- 1 627 690
- DE-A1- 3 233 366
- DE-U1- 20 307 518
- US-A1- 2003 022 128
- US-B2- 6 499 630

## Beschreibung

Die vorliegende Erfindung betrifft eine Vorrichtung zum Vermischen von zumindest zwei Komponenten, insbesondere von einer Binder-Komponente und einer Härter-Komponente zu einem pastösen oder flüssigen Mischgut, gemäß dem Oberbegriff des Anspruches 1 sowie ein Verfahren hierfür.

Derartige Vorrichtungen zur Vermischung von zumindest zwei Komponenten finden beispielsweise bei der Herstellung von Spachtelmassen Anwendung, wobei eine Härter-Komponente mit einem 1...2%igen Anteil einer Binder-Komponente zugemischt wird, um eine aushärtbare Spachtelmasse zu erzeugen. Die Mischvorrichtung weist zur Zufuhr der jeweiligen Komponenten Eintrittsöffnungen auf, über welche die Komponenten in die Mischkammer zugegeben werden. Die Komponenten sind in vorgeschaltenen Aufnahmebehältern wie Kartuschen oder Ähnlichem bevorratet, wobei die Mischvorrichtung Teil einer Einrichtung zur Bereitstellung von Spachtelmassen ist.

Eine derartige Vorrichtung zur Herstellung einer gebrauchsfertigen Spachtelmasse für die Verspachtelung von Oberflächen, welche beispielsweise Fahrzeugkarosserien betreffen, ist aus der DE 203 07 518 U1 bekannt. Die Vorrichtung hat zwei an einer Basisstation angeordneter Vorratsbehälter, von denen der eine mit einer Binder-Komponente, nämlich einer Spachtelmasse-Komponente, und der andere mit einer Härter-Komponente befüllt ist. Mit Hilfe einer Dosiereinrichtung werden die beiden Komponenten jeweils über einen Zufuhrkanal kontinuierlich einer Mischkammer zugeführt, in der die Komponenten miteinander in Kontakt geraten. Die Mischkammer ist aus einem Schlauchabschnitt eines flexiblen Schlauches gebildet, an dem außenseitig Presswalzen angreifen, die den Schlauchabschnitt zusammendrücken und gleichzeitig um eine Längsachse umlaufend antreiben. Durch die dabei auftretende Reibung und die Adhäsion der Komponenten an der Innenwand des Schlauches werden die Komponenten miteinander vermischt. Nachdem das Mischgut den Schlauchabschnitt durchlaufen hat, gelangt es zu einer an dem Schlauch vorgesehenen Austrittsöffnung, an der es kontinuierlich aus dem Schlauch austritt. Die Schlauchwand besteht aus einem luftdichten Kunststoff, so dass die dem Schlauch umgebende Luft während des Mischprozesses nicht in das Mischgut gelangen und in diesem in Form von Poren oder Lunkern eingeschlossen werden kann.

Durch die EP 1 627 690 A ist eine Klebstoffpistole zum Auftragen, insbesondere eines Zweikomponentenklebers bekannt, die in einfacher Weise eine breite Spanne von Mischungsverhältnissen zwischen einer relativ zähen Klebstoffkomponente und einer relativ flüssigen Klebstoffkomponente in einer Klebstoffpistole ermöglicht. Diese Klebstoffpistole umfasst einen ersten zylindrischen Behälter, der mit einem ersten Kolben zum Pressen einer relativ zähen Klebstoffkomponente aus einem ersten zylindrischen Behälter versehen ist, einen zweiten zylindrischen Behälter, der mit einem zweiten Kolben zum Pressen einer relativ flüssigen Klebstoffkomponente aus dem zweiten zylindrischen Behälter versehen ist, eine Mischeinheit, in die der erste zylindrische Behälter und der zweite zylindrische Behälter münden, und Antriebsmittel zum Bewegen des ersten und des zweiten Kolbens, wobei die Antriebsmittel für eine größere Geschwindigkeit des ersten Kolbens, als der Geschwindigkeit des zweiten Kolbens ausgelegt sind, wobei der erste zylindrische Behälter einen größeren Innendurchmesser aufweist, als der zweite zylindrische Behälter.

Die EP 1 570 805 A offenbart eine Vorrichtung zur Erzeugung eines Gemisches aus mehreren Komponenten, insbesondere für zahnmedizinische Zwecke: Diese Vorrichtung umfasst mindestens zwei Kartuschen, wobei jede Kartusche eine Komponente des Gemisches aus mehreren Komponenten und einen Kolben enthält, der zum Hinauspressen der Komponente aus der Kartusche eingerichtet ist und eine Antriebsvorrichtung für die Kolben, in der die Antriebsgeschwindigkeit einstellbar ist, wobei die Antriebsvorrichtung einen Schrittmotor aufweist. Bei niedrigen Drehzahlen pro Minute soll der Schrittmotor ein höheres Drehmoment im Vergleich zu bekannten Gleichstrommotoren bieten, während er auch hohe Drehzahlen pro Minute zur Verfügung stellt, wenn auch mit vergleichsweise geringem Drehmoment, was für einen schnellen Vortrieb und Rückzug der Kolben ausreicht.

Die US 6 499 630 B offenbart eine Anordnung zum verhältnisgleichen Ausbringen von zwei oder mehr fließfähigen Substanzen, aus zwei oder mehr Spritzen, von denen zumindest eine auch allein oder in Verbindung mit anderen Spritzen benutzt wird, insbesondere für Dentalzwecke. Nach dieser Anordnung ist vorgesehen, dass sowohl die Spritzenkörper als auch die Spritzenkolben unabhängig von der jeweiligen Kolbenstellung in Vorschubrichtung starr durch lösbare Kupplungseinrichtungen miteinander gekuppelt werden können. Die Kupplungseinrichtungen sind dabei so ausgebildet, dass die Kolben und/oder die Spritzenkörper in beliebiger Relativstellung zueinander in Vorschubrichtung verbunden werden können. Diese Anordnung sieht ferner vor, dass die Spritzenkörper nur in einer vorbestimmten Relativstellung, die den Kolben zugehörigen Kolbenstangen aber in einer beliebigen relativen Stellung miteinander kuppelbar sind.

In der Praxis hat sich jedoch gezeigt, dass die mit der Vorrichtung angemischte Spachtelmasse gelegentlich noch Inhomogenitäten aufweist. Wenn die Spachtelmasse an der Oberfläche einer Fahrzeugkarosserie verspachtelt wird, härtet die Spachtelmasse an den Stellen, an denen keine Härter-Komponente vorhanden ist, nicht aus. Die Beseitigung derartiger Fehlstellen ist mit einem relativ großen Aufwand verbunden, da die Spachtelmasse durch Schleifen von der Karosserie abgetragen und danach die Karosserie erneut verspachtelt werden muss. Wenn derartige Fehlstellen bei einer Reparatur unbemerkt bleiben und die Karosserie danach lackiert wird, wird es sogar erforderlich, die Stelle neu zu lackieren. Bleibt die Mischvorrichtung längerfristig außer Gebrauch, kann ein Eintrocknen der Spachtelmasse insbesondere im Endbereich des Schlauches erfolgen, was zur Unbrauchbarkeit der Vorrichtung führt. Darüber hinaus ist der Schlauch einem erheblichen Verschleiß ausgesetzt, da während des Betriebes der Vorrichtung in den Schlauch eine erhebliche Walkarbeit eingebracht wird. Weiterhin ist die Vorrichtung aufgrund der Presswalzen bzw. -rollen sehr aufwendig und platzintensiv.

Ein weiterer Nachteil ist darin zu sehen, dass die Zugabe der Härter-Komponente zumindest mittels einer Sichtkontrolle nicht möglich ist, so dass nicht sichergestellt ist, dass eine kontinuierliche Zufuhr der Härter-Komponente in die Binder-Komponente erfolgt. Eventuelle Massenanteile der Binder-Komponente, welche nicht mit der Härter-Komponente vermengt sind, können nicht identifiziert werden, wobei durch die lediglich einfache Zufuhr der Härter-Komponente über ein innenliegendes Zufuhrrohr unsicher ist, ob Luftblasen in der Härter-Komponente auftreten.

Es ist daher die Aufgabe der vorliegenden Erfindung, eine Vorrichtung zur Vermischung von zumindest zwei Komponenten zu einem Mischgut zu schaffen, welche eine einfache Konstruktion aufweist und eine homogene Vermischung einer Binder-Komponente mit einer Härter-Komponente sicherstellt, wobei das Mischgut zuverlässig und vollständig aushärten soll, um eine Spachtelmasse ohne Lufteinschlüsse zu erhalten.

Diese Aufgabe wird ausgehend von einer Vorrichtung gemäß dem Oberbegriff des Anspruchs 1 in Verbindung mit dessen kennzeichnenden Merkmalen gelöst.

Vorteilhafte Weiterbildungen der Erfindung sind in den abhängigen Ansprüchen angegeben.

Die Erfindung schließt die technische Lehre ein, dass der Mischer der Vorrichtung einen hohlzylinderartigen Statorteil und einen in diesem konzentrisch um eine Längsachse drehbar aufgenommenen Rotorteil aufweist und die Mischkammer zwischen dem Statorteil und dem Rotorteil ringspaltartig ausgebildet ist, wobei sich mehrere am Statorteil angeformte erste Mischzähne radial nach innen und mehrere am Rotorteil angeformte zweite Mischzähne radial nach außen in die Mischkammer hinein erstrecken, um vermittels einer Rotationsbewegung des Rotorteils im Statorteil die Mischzähne gegeneinander zu bewegen und eine Vermischung der beiden Komponenten zu schaffen, wobei der Statorteil mindestens eine, bevorzugterweise zwei mit der Mischkammer verbundene Eintrittsöffnungen für die Härter-Komponente aufweist und wobei die Zuführung der Binder-Komponente und der Härter-Komponente mittels einer Steuereinrichtung zur Mischkammer derart erfolgt, dass vor Beginn eines jeden Mischprozesses vor dem Zulauf der Binder-Komponente bzw. vor Beginn des kontinuierlichen Mischprozesses mit der Drehbewegung der gegeneinanderlaufenden Mischzähne des Mischers eine Menge von 0,1 Gramm bis 0,5 Gramm, bevorzugterweise 0,2 Gramm pastöse oder flüssige Härter-Komponente in die Mischkammer eingespritzt wird, woraufhin der Zulauf der Binder-Komponente und der Zulauf der Härter-Komponente erfolgt.

Die Erfindung geht dabei von dem Gedanken aus, dass der Mischer der Vorrichtung als eine Einheit von zwei Bauteilen, nämlich dem Statorteil und dem Rotorteil, ausgebildet ist. Die Binder-Komponente und die Härter-Komponente werden über die jeweiligen Eintrittsöffnungen in die Mischvorrichtung eingebracht, und geraten unmittelbar in die Mischkammer. Aufgrund der Rotationsbewegung des Rotorteils im ruhenden Statorteil drehen sich die zweiten Mischzähne, wo hingegen die ersten Mischzähne ruhen. Damit wird eine Scherung bzw. Teilung in das Mischgut eingebracht, so dass die Härter-Komponente mit der Binder-Komponente zuverlässig vermengt wird. Über die Abgabeöffnung tritt das Mischgut aus der Mischkammer wieder aus, wobei die Abgabeöffnung fernseitig von den Eintrittsöffnungen angeordnet ist, so dass das Mischgut die gesamte ringspaltartige Mischkammer durchläuft. Die Strömungsbewegung des Mischgutes wird durch eine Druckbeaufschlagung der jeweiligen Vorratsbehälter der Komponenten erzeugt, so dass die Komponenten durch die jeweiligen Eintrittsöffnungen in die Mischkammer hineingedrückt werden. Basierend auf dem Druck bzw. dem Strömungsquerschnitt der jeweiligen zugegebenen Komponenten wird das Mischungsverhältnis bestimmt. Die Zuführung der Binder-Komponente und der Härter-Komponente zur Mischkammer wird vermittels einer Steuereinrichtung vorgenommen, die jedoch noch eine weitere Aufgabe hat.

Vor Beginn eines jeden Mischprozesses wird nämlich vor dem Zulauf der Binder-Komponente bzw. vor Beginn des kontinuierlichen Mischprozesses mit der Drehbewegung der gegeneinander laufenden Mischzähne des Mischers eine Menge von 0,1 Gramm bis 0,5 Gramm, bevorzugterweise 0,2 Gramm pastöse oder flüssige Härter-Komponente in die Mischkammer eingespritzt, woraufhin der Zulauf der Binder-Komponente und der Zulauf der Härter-Komponente erfolgt.

Und diese Einspritzung einer kleinsten Menge an Härter-Komponente wird ebenfalls von der Steuereinrichtung ausgelöst und überwacht. Durch das Einspritzen bzw. Injizieren einer kleinen Menge an pastöser oder flüssiger Härter-Komponente vor oder bei Beginn eines jeden kontinuierlichen Mischprozesses in die Mischkammer der Vorrichtung werden fehlerhafte Mischergebnisse vermieden, denn ohne diese Vorab-Injizierung kommt es immer zu fehlerhaften Mischergebnissen. Das liegt daran, dass das Mischungsverhältnis bis 2 % zu 98 % von Binder-Komponente und Härter-Komponente beträgt. Die Erstmenge, die etwa 1 cm³ beträgt, enthält dann entweder gar keinen Härter oder eine so stark reduzierte Menge an Härter, dass es zu mangelhaften Aushärtungen partiell kommen kann. Ein brauchbares Härtungsergebnis wird deshalb mit einem Benzoylperoxid-Anteil (50 %ige Paste) zwischen 0,8 % bis 5 % erreicht. Wird dieser Mengenanteil in Über- oder Unterdosierung nicht eingehalten, dann entstehen Qualitäts-Probleme beim Mischgut. Die Unterdosierung führt zu nicht ausreichender Endhärte. Die Überdosierung führt zu einer unerwünschten Anreicherung der Binder-Komponente (Spachtelmasse) mit Weichmacher, der zu etwa 50 % in der Härterpaste enthalten ist. Werden diese Richtwerte bei der Aushärtung des Endproduktes nicht eingehalten, dann kommt es zu fehlerhaften Endergebnissen bei der Lackierung. Aus diesem Grunde ist die erfindungsgemäße Lösung im Anspruch 1 besonders vorteilhaft, da brauchbare Härtungs-Ergebnisse erreicht werden.

Dieser Vorlauf der Einspritzung einer geringen Menge an Härter-Komponente vor Beginn des eigentlichen Zulaufs von Binder-Komponente und Härter-Komponente für den Mischprozess ist kein Vorlauf, um ein verhältnisgleiches Ausbringen der Binder-Komponente und der Härter-Komponente zu erreichen, denn die Härter-Komponente darf nicht mehr als 4 % betragen, weil sonst nicht zulässige Reaktionen eintreten und u. a. auch eine Peroxid-Bleichwirkung der in der Härter-Komponente enthaltenden Farbpigmente eintreten kann.

Eine vorteilhafte Ausführungsform der vorliegenden Erfindung sieht vor, dass die Eintrittsöffnungen direkt in die Mischkammer des Mischers münden, wobei die Eintrittsöffnung zur Zufuhr der Härter-Komponente zweifach vorhanden ist, um eine redundante Belieferung des Mischgutes mit der Härter-Komponente zu schaffen. Das Erfordernis von einer redundanten Zufuhr der Härter-Komponente beruht auf der Erkenntnis, dass Inhomogenitäten im Mischgut normalerweise durch Lufteinschlüsse in der Härter-Komponente verursacht werden, die sich auch bei sorgfältiger Fertigung der Härter-Komponente in der Praxis nicht sicher vermeiden lassen. Da die Härter-Komponente ein Anteil von weniger als 5 % und bevorzugt von nur etwa 2 % am Gesamtvolumen des Mischgutes aufweist, können bereits kleinste Lufteinschlüsse in der Härter-Komponente zur Folge haben, dass in dem Mischgut Stellen vorhanden sind, die keine Härter-Komponente enthalten und somit nicht aushärten. Da bei der erfindungsgemäßen Vorrichtung bevorzugt zwei Vorratsbehälter für die Härter-Komponente vorgesehen sind und über getrennte Zuführkanäle mit der Mischkammer verbunden sind, kann für den Fall, dass in einem der Zuführkanäle eine Luftblase enthalten sein sollte, der Mischkammer trotzdem über den zweiten Zuführkanal weiterhin die Härter-Komponente zugeführt werden. Die Gefahr, dass in sämtlichen Zuführkanälen gleichzeitig Luftblasen der Härter-Komponente enthalten sein sollten, ist um ein Vielfaches geringer und kann daher vernachlässigt werden. Die Vorrichtung kann beispielsweise für folgende Bindermittelsysteme verwendet werden: Polyesterharze (ungesättigt), Peroxyd-Styrol-Systeme, Epoxid-Harze (zweikomponentig), Polyurethan-Harzsysteme (zweikomponentig), Phenolharz-Systeme, Silicon-Systeme (zweikomponentig), Acrylat-Systeme (zweikomponentig) oder Thiocoll-Systeme (Polidisulfid-Systeme).

Um die Zufuhr der Härter-Komponente mittels einer Sichtkontrolle kontrollieren zu können, ist vorgesehen, dass zumindest der Statorteil aus einem transparenten Material gebildet ist, wobei das transparente Material aus der Gruppe der Kunststoffe, umfassend ein Polycarbonat (PC), ein Polymethylmetacrylat (PMMA) und/oder ein Styrol-Acryl-Nitril (SAN), ausgebildet ist. Dabei ist es weiterhin von besonderem Vorteil, die Härter-Komponente einzufärben. Durch den transparenten Statorteil ist die Zufuhr der Härter-Komponente sichtbar, so dass der Bediener während des Betriebes der Mischvorrichtung die Zufuhr der Härter-Komponente sehenden Auges kontrollieren kann.

Als eine weitere vorteilhafte Ausführung der Erfindung ist vorgesehen, dass die ersten Mischzähne auf zumindest einer ersten Mischzahnebene und die zweiten Mischzähne auf zumindest einer zweiten Mischzahnebene angeordnet sind, und die Mischzahnebenen axial in Richtung der Längsachse etagenartig zueinander versetzt sind, so dass die zweiten Mischzähne des Rotorteils in den jeweiligen Zwischenräumen der ersten Mischzähne des Statorteils radial umlaufen. Insgesamt können von den ersten Mischzähnen des Statorteils fünf Mischzahnebenen vorgesehen sein, so dass in den jeweiligen Zwischenräumen die zweiten Mischzähne des Rotorteils auf insgesamt vier Mischzahnebenen angeordnet sind. Das Mischgut durchläuft dabei von der Eintrittsöffnung bis zur Abgabeöffnung die insgesamt fünf Mischzahnebenen der ersten Mischzähne sowie die vier Mischzahnebenen der zweiten Mischzähne.

Vorteilhafterweise weisen die Mischzähne jeweils Stirnseitenflächen auf, welche jeweils in Axialrichtung aneinander zugewandt sind, um diese bei einer axialwirkenden Kraft zwischen dem Statorteil und dem Rotorteil gegeneinander zu positionieren. Weiterhin sind die Stirnseitenflächen in Bezug zu einer normal zur Rotationsachse angeordneten Ebene unter einem Winkel α geneigt, so dass die Stirnseitenflächen während des Mischvorganges aufeinander abgleiten, ohne dass von den Mischzähnen Material abträgt und in das Mischgut gelangt. Dadurch ist es möglich, die Länge des Rotorteils in Richtung der Rotationsachse kurz zu halten, so dass nach Gebrauch des Rotorteils bzw. des Statorteils nur eine entsprechende Restmenge des Mischgutes in der Mischkammer verbleibt. Die Vorrichtung ermöglicht dadurch einen geringen Verbrauch der Komponenten. Während des Mischvorganges werden die Mischzähne des Rotorteils und die Mischzähne des Statorteils durch den Förderdruck der Komponenten gegeneinander gedrückt, wobei die schräg zueinander verlaufenden Stirnseitenflächen aufeinander gleiten, ohne dass von den Zähnen Werkstoff abrasiv abgetragen wird und in das Mischgut gelangt. Dabei bilden die Komponenten des Mischgutes zwischen den aufeinander gleitenden Stirnseitenflächen einen dünnen Film, der als Gleitschicht wirkt. Der Winkel α, unter dem die Mischzähne gegeneinander der normal zur Rotationsachse angeordneten Ebene geneigt sind, kann mindestens 5°, gegebenenfalls 10° und bevorzugt mindestens 15° betragen.

Eine weitere vorteilhafte Ausführungsform der Erfindung sieht vor, dass das Statorteil eine Stützlagerfläche umfasst, an welcher der Rotorteil mit dem an diesem angeformten Mischzähnen stirnseitig anliegt und abgleitet um eine axiale Gleitlageanordnung zu schaffen. Zunächst wird der Rotorteil über eine den Eintrittsöffnungen abgewandten offenen Endseite in den Statorteil eingeführt, bis dieser an die Stützlagerfläche mit den Mischzähnen anstößt. Dadurch wird eine einseitige axiale Lagerung des Rotorteils im Statorteil ermöglicht. Die Geometrie des Rotorteils ist derart angepasst, so dass die zweiten Mischzähne des Rotorteils beim stirnseitigen Anschlag der Mischzähne an die Stützlagerfläche in den jeweiligen Zwischenräumen der ersten Mischzähne des Statorteils liegen. Die axiale Abstützung des Rotorteils erfolgt in der Fügerichtung des Rotorteils in den Statorteil gegen die Stützlagerfläche, wobei bei einem Axialspiel in Richtung der Öffnung des Statorteils die Gefahr besteht, dass die ersten und zweiten Mischzähne aneinander geraten. Aufgrund der Stirnseitenflächen, welche unter einem Winkel α angeordnet sind, wird der Rotorteil in Richtung der Fügerichtung, aus der der Rotorteil in den Statorteil eingeschoben wird, gegen die Stützlagerfläche zurückgeführt.

Vorteilhafterweise weist der Rotorteil endseitig Vorsprünge auf, welche in die Eintrittsöffnung zur Zufuhr der Binder-Komponente hineinragen und mit der Rotation des Rotorteils mitrotieren, um die Thixotropie der Binder-Komponente bereits im Zuführkanal der Eintrittsöffnung zu reduzieren. Bei der Zuführung der Binder-Komponente in die Mischkammer wird somit die Thixotropie der Binder-Komponente vorübergehend reversibel zerstört, wodurch sich die Härter-Komponente besser in die Binder-Komponente verteilt, insbesondere wenn in einem der Zuführkanäle für die Härter-Komponente einmal eine Luftblase angeordnet sein sollte und dadurch der Mischkammer nur noch eine entsprechend reduzierte Menge der Härter-Komponente zugeführt werden kann.

Beispielsweise muss bei einer Polyester-Binder-Komponente der Abstand zwischen der Härter-Komponente und der Binder-Komponente in dem Mischgut deutlich geringer als 0,5 mm sein, damit eine gleichmäßige Härtung des Mischgutes erreicht wird und keine Bereiche im Mischgut verbleiben, in denen die Härtung ausfällt. Die Vorsprünge sind derart am Rotorteil angeformt, dass diese zumindest teilweise innerhalb der Eintrittsöffnung für die Binder-Komponente rotieren, und in diese die Bewegungsenergie einbringen.

Durch die Einbringung der Bewegungsenergie reduziert sich die Fließfähigkeit, insbesondere bei niedrigen Temperaturen, die abhängig vom Einsatzort deutlich unter 12° liegen können, so dass vermittels der Einrichtung zur Reduzierung der Thixotropie der vorgesehene Förderdruck zur Einführung der Binder-Komponente dennoch ausreicht. Durch das Einbringen der Bewegungsenergie kann die Thixotropie der Binder-Komponente reversibel abgeschwächt oder sogar völlig beseitigt werden.

Eine weitere Ausführungsform der Erfindung sieht vor, dass der Rotorteil eine endseitig offene, hohlzylinderartige Ausnehmung aufweist, in welche ein Kern geometrieangepasst einsetzbar ist, vermittels dessen der Rotorteil antreibbar ist. Der Rotorteil weist einen Hohlraum auf, welcher einseitig offen ist. Durch die hohlzylinderartige Öffnung bzw. Ausnehmung ist der Kern einsetzbar, um den Rotorteil mittels einer Rotationsbewegung anzutreiben. Der Kern kann dabei beispielsweise mit einem Motor in Verbindung stehen, um die Drehbewegung in den Rotorteil einzuleiten. Zur Übertragung des Drehmomentes ist vorgesehen, dass die Ausnehmung vom Körper des Rotorteils radial nach innen verlaufende Rastrippen aufweist, welche in entsprechende Aussparungen im Kern einrasten, die im Kern vorgesehen sind. Vorzugweise können acht Rastrippen vorgesehen sein, wobei auch eine andere Anzahl von Rastrippen ausreichend bzw. erforderlich ist. Die Übertragung des erforderlichen Antriebsdrehmomentes auf den Rotorteil kann alternativ zu den vorgesehenen Rastrippen auch durch ein Polygon erfolgen, welches beispielsweise nach Art eines Sechskant-inbus-Systems ausgebildet sein kann.

Vorteilhafterweise weist der Rotorteil Dichtlippen auf, um die Mischkammer zwischen dem Rotorteil und dem Statorteil abzudichten und ein Austreten des Mischgutes zu verhindern. Die Dichtlippen sind als umlaufende Vorsprünge endseitig am Rotorteil vorgesehen, und grenzen mit einem Spielmaß bzw. einem Übergangsmaß an die Innenwandung des Statorteils an, um eine Abdichtung der Mischkammer zu schaffen. Dabei können mehrere Dichtlippen vorgesehen sein, um die Dichtwirkung zu verbessern. Im Bereich der Mischkammer weist der Rotorteil einen ersten Außendurchmesser auf, welcher zugleich die innere Wandung der Mischkammer bildet. Ein zweiter Durchmesser beginnt mit der Anordnung der Dichtlippen, wobei dieser größer ist als der erste Durchmesser im Bereich der Mischkammer. Die Abgabeöffnung im Statorteil ist auf der Höhe der Mischkammer angeordnet, so dass das Mischgut im Endbereich des kleineren ersten Durchmessers aus der Mischkammer austreten kann. Erst nach der Durchmessererweiterung sind die Dichtlippen angeordnet, so dass ein Austreten des Mischgutes durch die Dichtlippen auf dem vergrößerten Durchmesser vermindert wird.

Eine weitere Ausführungsform der Erfindung sieht vor, dass der Statorteil zumindest eine tellerförmige Anformung am Außenumfang aufweist, wobei zumindest eine der tellerförmigen Anformungen eine halbmondförmige Rastkontur umfasst, in die beim Einsetzen der Mischvorrichtung ein Stiftelement eingreift, um die radiale Position der Abgabeöffnung im Statorteil zu sichern. Vorzugsweise befindet sich die Abgabeöffnung in einer vertikalen nach unten gerichteten Position, so dass der Bediener das einsatzfertige Mischgut in einem Behälter aufnehmen kann. Das Stiftelement kann an einer Halterung bzw. Aufnahmeeinrichtung für die Mischvorrichtung angeordnet sein, so dass die Mischvorrichtung, welche zunächst aus dem in dem Statorteil gefügten Rotorteil besteht, auf den Kern geschoben wird, welcher ebenfalls an der Aufnahmeeinheit angeordnet ist. Das Stiftelement sichert somit den Statorteil gegen ein Verdrehen, um zu gewährleisten, dass die Ausgabeöffnung für das Mischgut in der vertikal nach unten gerichteten Position verbleibt.

Die tellerförmigen Anformungen wirken als Stabilisierungskragen, die gleichzeitig als Griff für die Aufnahme der Mischvorrichtung durch den Bediener dienen können, um zu verhindern, dass beim Wechseln des Mischers die Hände des Bedieners verschmutzen. Die halbmondförmige Ausnehmung kann alternativ als Bohrung ausgeführt sein, so dass sich der Stift in die Bohrung hinein erstreckt. Gemäß dem vorliegenden Ausführungsbeispiel sind drei tellerförmige Anformungen vorgesehen, wobei zumindest zwei der drei Anformungen materialeinheitlich in die Abgabeöffnung übergehen, und die halbmondförmige Rastkontur an der endseitig angeordneten dritten tellerförmigen Anformung vorgesehen ist. Alternativ kann die halbmondförmige Rastkontur jedoch auch in jeder der tellerförmigen Anordnung vorgesehen sein.

Eine weitere Ausführungsform der Erfindung sieht vor, dass der Rotorteil einen zylinderförmigen Lagerabschnitt aufweist, um im Statorteil zur radialen Lagerung eine Gleitlageranordnung zu schaffen. Der Lagerabschnitt ist als zylinderförmiger Abschnitt außenseitig im Rotorteil vorgesehen, und ist in einem zylinderförmigen Innenkonturabschnitt im Statorteil einsetzbar und bildet eine Gleitlageanordnung. Somit ist der Rotor axial über die Stützlagerfläche bzw. die Stirnseitenflächen der Mischzähne gelagert und radial vermittels des Lagerabschnittes gelagert.

Vorteilhafterweise ist zwischen den Dichtlippen ein Hohlraum ausgebildet, um ein Auffangen von durch die Dichtlippen hindurch tretendem Mischgut zu ermöglichen. Weiterhin weist der Statorteil im zylindrischen Abschnitt des Hohlraumes umfangseitig zumindest eine Austrittsöffnung auf, um ein Austreten von Mischgut seitens des zylinderförmigen Lagerabschnittes zu verhindern. Aufgrund des Druckes des Mischgutes in der Mischkammer kann es vorkommen, dass Mischgut dennoch durch die Dichtlippen hindurch austreten kann. Um zu verhindern, dass das Mischgut endseitig aus dem Statorteil bzw. aus der Mischvorrichtung austritt, ist ein Hohlraum vorgesehen, um austretendes Mischgut aufzunehmen. Sollte der Hohlraum mit Mischgut gefüllt sein, kann dieses durch die Austrittsöffnungen austreten, um endgültig ein Austreten des Mischgutes aus dem Bereich des zylindrischen Lagerabschnittes zu verhindern. Vorzugsweise sind zwei Austrittsöffnungen angeordnet, wobei auch eine einzige Austrittsöffnung vorzugsweise im Bereich der Abgabeöffnung vorgesehen sein kann.

Weitere, die Erfindung verbessernde Maßnahmen sind in den Unteransprüchen angegeben oder werden nachfolgend gemeinsam mit der Beschreibung eines bevorzugten Ausführungsbeispiels der Erfindung anhand der Figuren näher dargestellt. Es zeigen:
- Fig. 1: eine schaubildliche Ansicht der Vorrichtung zum Vermischen von zwei Komponenten unter Verwendung eines Mischers aus einem Statorteil und einem Rotorteil mit steuerbaren Zuführungen für eine Binder-Komponente und zwei Härter-Komponenten aus mit der Mischkammer verbundenen Vorratsbehältern,
- Fig. 2: eine schaubildliche Explosionsdarstellung der Mischvorrichtung mit dem Statorteil und dem Rotorteil,
- Fig. 2A: eine schaubildliche Ansicht des Stators der Mischvorrichtungen mit den Zuführungen für die Binder-Komponente und für die Härter-Komponente,
- Fig. 3: eine Ansicht der Mischvorrichtung, in der der Rotorteil im Statorteil eingesetzt ist und der Statorteil geschnitten dargestellt ist,
- Fig. 4: einen Querschnitt durch die Mischvorrichtung mit geschnittenem Statorteil sowie geschnittenem Rotorteil,
- Fig. 5: einen Längsschnitt durch den Statorteil,
- Fig. 6: eine Draufsicht auf den Statorteil, wobei die Draufsicht endseitig aus Richtung der Eintrittsöffnungen erfolgt,
- Fig. 7: eine Seitenansicht des Rotorteils der Mischvorrichtung und
- Fig. 8: einen Teilquerschnitt durch den Rotorteil sowie dem Statorteil entlang einer ringförmig umlaufenden Mischzone innerhalb der Mischkammer, wobei die Zähne des Statorteils schraffiert und die Zähne des Rotorteils unschraffiert dargestellt sind.

Bei den Figuren handelt es sich lediglich um eine beispielhafte technische Ausführung der vorliegenden Erfindung.

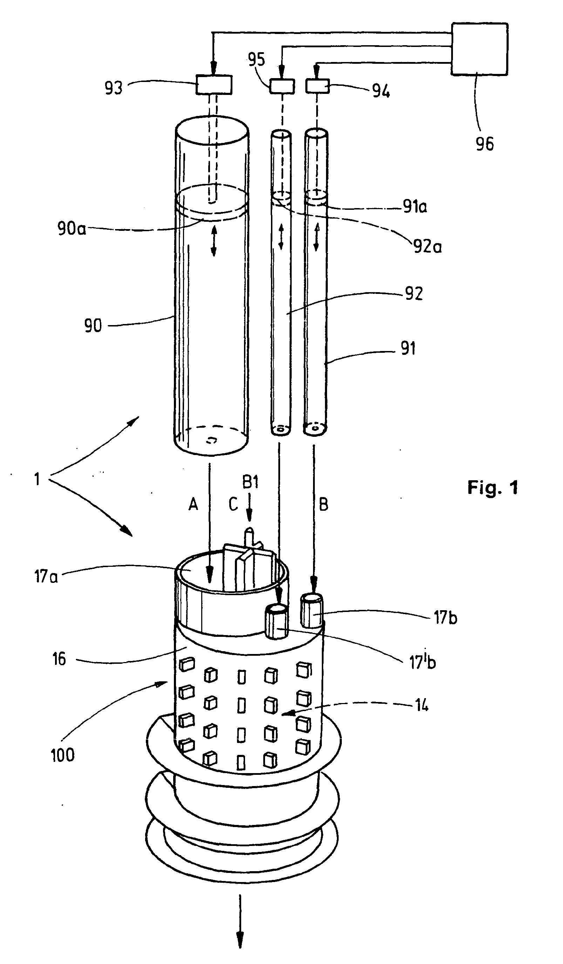

Die in Fig. 1 gezeigte Vorrichtung 1 zum Mischen von zwei Komponenten umfasst einen Vorratsbehälter 90 für eine Binder-Komponente A und zwei Vorratsbehälter 91, 92 für eine Härter-Komponente B, B1, wobei auch nur ein Vorratsbehälter für die Härter-Komponente B1 oder auch mehr als zwei Vorratsbehälter für die Härter-Komponente B, B1 vorgesehen sein können.

Die Vorratsbehälter 90, 91, 92 stehen mit Antriebseinrichtungen 93, 94, 95 in Verbindung, deren Steuerungen über eine Steuereinrichtung bzw. Programmschaltwerk 96 erfolgen. Das Herausdrücken der Binder-Komponente A und der Härter-Komponenten B, B1 aus ihren Vorratsbehältern 90, 91, 92 erfolgt vermittels in den Innenräumen der Vorratsbehälter angeordneter, in Behälterlängsrichtung verschieblichen Kolben 90a, 91 a, 92a, die über die Antriebseinrichtungen 93, 94, 95 betätigt werden. Die Vorratsbehälter 90, 91, 92 weisen bevorzugterweise eine zylindrische Form auf.

Die Antriebseinrichtungen können motorischer oder hydraulischer Art sein.

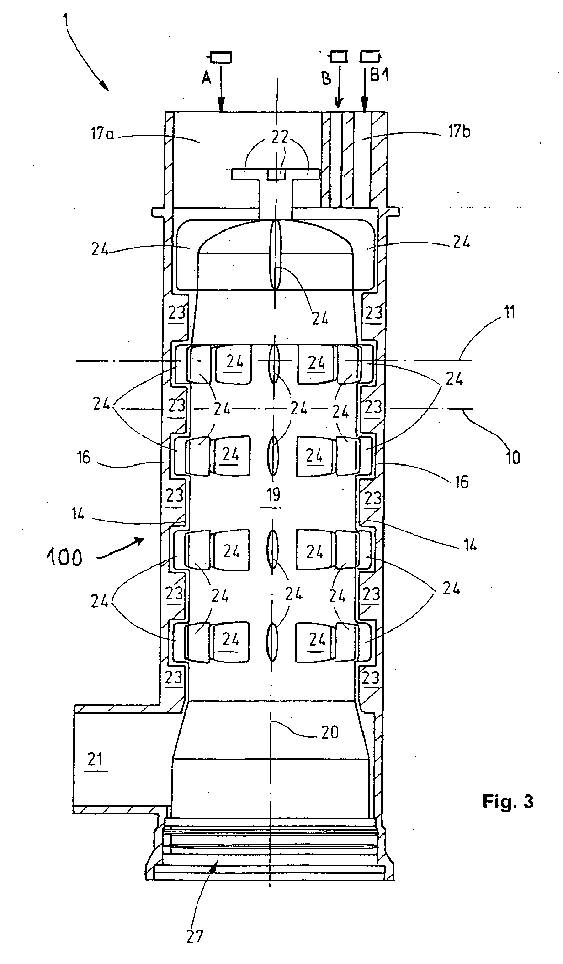

Die Vorrichtung 1 umfasst ferner einen Mischer 100, der gemäß Fig. 1, 2, 2A und 3 einen Statorteil 16 und einen Rotorteil 19 umfasst. Der Rotorteil 19 ist in den Statorteil 16 eingesetzt, und drehbar in diesem gelagert. Bei C greift der Antrieb für den Rotorteil 19 an (Fig. 1). Zur Zuführung des Mischgutes weist der Statorteil 16 Eintrittsöffnungen 17a, 17b und 17'b auf, wobei durch die Eintrittsöffnung 17a die Binder-Komponente und durch die beiden Eintrittsöffnungen 17b und 17'b die Härter-Komponenten zugeführt wird. Zur Verdeutlichung der Zufuhr der drei Komponenten sind jeweilige Pfeile mit A, B und B' gekennzeichnet. Der Rotorteil 19 ist um eine Längsachse 20 drehbar gelagert, wobei endseitig am Rotorteil 19 Vorsprünge 22 vorgesehen sind, welche mit dem Rotorteil 19 mitrotieren und sich in die Eintrittsöffnung 17a hinein erstrecken. Damit wird eine Erhöhung der Fließfähigkeit der thixotropen Binder-Komponente A bewirkt, wobei die Vorsprünge 22 mehrfach am Rotorteil 19 endseitig angebracht sind.

Durch diese Vorsprünge 22 wird Bewegungsenergie in die Binder-Komponente A eingebracht, um deren Thixotropie reversibel zu zerstören, die Binder-Komponente A kann sich dadurch beim Eintritt in eine nachfolgend angeordnete Mischkammer 14 gleichmäßiger mit den beiden Härter-Komponenten B und B1 vermischen. Die Mischkammer 14 ist zwischen dem Rotorteil 19 sowie dem Statorteil 16 ringspaltartig ausgebildet. Die zu vermischenden Komponenten A, B und B1 werden derart dem Mischer 100 zugeführt, dass sie sich erst im inneren der Mischkammer 14 miteinander verbinden. Dadurch bleiben nach dem Beenden des Mischvorganges und dem Trennen des Mischers 100 von einer entsprechenden Basisstation alle Mischgutreste in dem Mischer 100. Diese ist als Einwegteil ausgestaltet, welches nach Gebrauch entsorgt und durch ein entsprechendes Neuteil ersetzt wird. Über die beiden Eintrittsöffnungen 17b und 17'b wird die Härter-Komponente B und B1 der Mischkammer 14 zugeführt, in der die Härter-Komponenten mit der Binder-Komponente A vermischt. Dabei erfolgt die Zuführung der Komponenten A, B und B1 in folgender Reihenfolge: Zuerst erfolgt das Einspritzen einer geringen Menge Härter-Komponente B in die Mischkammer 14. Danach werden gleichzeitig die Binder-Komponente A und die Härter-Komponente B1 mit der jeweils erforderlichen Verhältnismäßigkeit zugeführt, so dass die in die Mischkammer 14 gelangende Binder-Komponente A auf die sich bereits in der Mischkammer befindliche Härter-Komponente B trifft und sich bereits mit dieser vermischt. Diese Vorgehensweise hat zur Folge, dass in die Mischkammer einfließende Binder-Komponente A auf die bereits vorhandene Härter-Komponente B trifft und mit dieser vermischt wird, so dass kein Anteil an Binder-Komponente austreten kann, der keine Härter-Komponente aufweist. Es tritt somit immer mit der Härter-Komponente vermischte Binder-Komponente aus der Mischkammer aus, so dass auch das zuerst austretende Gemisch Härter-Komponente enthält und sofort verarbeitet werden kann. Das Einspritzen der Härter-Komponente wird steuerungstechnisch erreicht, indem eine entsprechende Steuerung der Antriebseinrichtung 94 bzw. 95 für die dosierte Zuführung der Härter-Komponente B und danach der Antriebseinrichtungen 93, 94, 95 für die dosierte Zuführung der Binder-Komponente A und der Härter-Komponente B. Des weiteren kann der Stator des Mischers 100 auch nur eine Zuführung für die Härter-Komponente aufweisen. In diesem Fall erfolgt über die Steuerung der Dosiervorrichtung zuerst eine Zufuhr einer kleinen Menge an Härter-Komponente in die Mischkammer 14, woraufhin dann die Zuführung der Binder-Komponente zusammen mit der Zuführung weiterer Härter-Komponenten erfolgt.

Mit Hilfe von vorgeschalteten in den Zeichnungen nicht dargestellter Dosiereinrichtungen werden die zu vermischenden Komponenten kontinuierlich durch die Mischkammer 14 hindurch zu einer am Statorteil 16 angeordneten Abgabeöffnung 21 gefördert, die in Durchflussrichtung hinter den Eintrittsöffnungen 17a, 17b und 17'b und nach der Mischkammer 14 angeordnet ist. Am Statorteil 16 sind mehrere erste Mischzähne 23 angeordnet, welche sich radial nach innen in die Mischkammer 14 erstrecken, wohingegen am Rotorteil 19 zweite Mischzähne 24 angeordnet sind, welche sich radial nach außen in die Mischkammer 14 hineinerstrecken.

Vermittels einer Rotationsbewegung des Rotorteils 19 im Statorteil 16 werden somit die Mischzähne 23, 24 gegeneinander bewegt, so dass eine Vermischung der beiden Komponenten A, B und B1 bewirkt wird. Wenn bereits der Vorlauf der Härter-Komponente B erfolgt ist und ein Teil der nachfolgenden Binder-Komponente A mit der Härter-Komponente B sich vermischt hat und die beiden anderen Komponenten A und B1 in die Mischkammer gedrückt werden, kann die weitere Zufuhr der Härter-Komponente B eingestellt werden. Es werden dann in der Mischkammer 14 zugeführte Binder-Komponente A und Härter-Komponente B1 miteinander vermischt. Diese beiden Komponenten A und B1 werden in einem vorgegebenen Verhältnis solange der Mischkammer zugeführt, bis die jeweils gewünschte Menge an Mischgut erhalten wird. Die ersten Mischzähne 23 sind auf einer ersten Mischzahnebene 10 und die zweiten Mischzähne 24 auf einer zweiten Mischzahnebene 11 angeordnet. Insgesamt sind fünf erste Mischzahnebenen 10 und vier zweite Mischzahnebenen 11 vorgesehen, welche ineinander verschachtelt wechselweise in axialer Richtung entlang der Längsachse 20 angeordnet sind. Die zweiten Mischzähne 24 laufen durch die Rotationsbewegung des Rotorteils 19 in den Zwischenräumen der ersten Mischzähne 23 radial um, welche ruhend am Statorteil 16 angeformt sind. Dadurch entsteht zwischen den Mischzähnen 23 und 24 eine Scher- bzw. Teilungsbewegung, so dass das Mischgut eine optimale Durchmischung erfährt.

Eine Vorvermischung der beiden Komponenten A, B und/oder B1 erfolgt durch größere zweite Mischzähne 24, welche am vorderen Ende des Rotorteils 19 angeordnet sind, so dass diese Komponenten durch diese Mischzahnebene vorvermischt werden. Die größeren ausgebildeten endseitig angeordneten zweiten Mischzähne 24 sind vierfach auf dem Umfang des Rotorteils 19 angeordnet und gehen jeweils in die ebenfalls vierfach vorhandenen Vorsprünge 22 über. Am offenen Ende weist der Statorteil 16 eine Aufnahmeöffnung auf, in welchem ein zylindrischer Lagerabschnitt 27, welcher am Rotorteil 19 angeformt ist, eine Lagerung des Rotorteils 19 im Statorteil 16 bewirkt. So ist eine radiale Lagerung des Rotorteils 19 im Statorteil 16 geschaffen. Die Durchmesserpassung des zylindrischen Lagerabschnittes 27 am Rotorteil 19 ist im Durchmesser so bemessen, dass eine entsprechende Gleitlageranordnung entsteht.

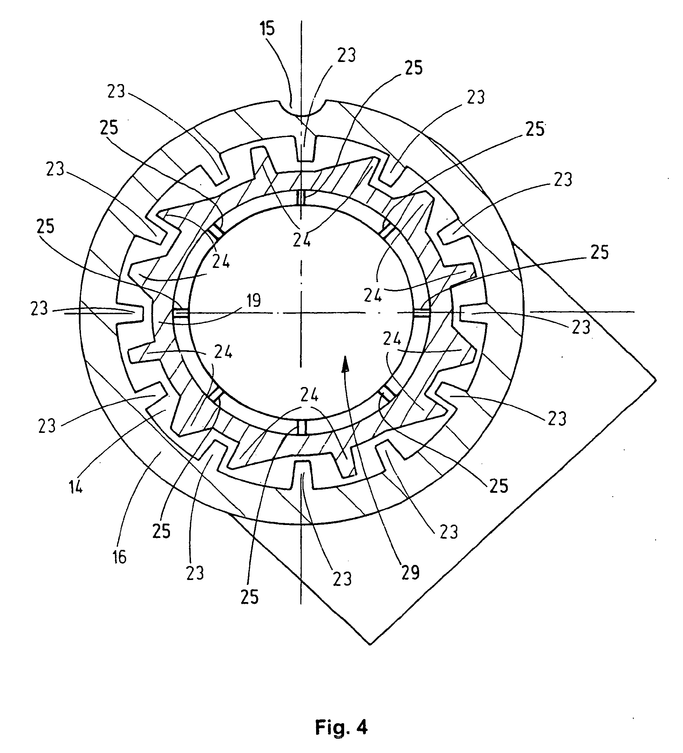

Fig. 4 zeigt einen Querschnitt des Mischers 100, wobei sowohl der Statorteil 16 als auch der Rotorteil 19 im Querschnitt dargestellt sind. Hierin ist insbesondere die Anordnung der Mischzähne 23 und 24 illustriert, wobei die zweiten Mischzähne 24 am Rotorteil 19 derart ausgeformt sind, dass in Bezug auf eine spritzgusstechnische Herstellung des Rotorteils 19 lediglich eine einzige Teilungsebene zur Anwendung eines einhubigen Spritzgusswerkzeuges hinreichend ist. Weiterhin ist erkennbar, dass die Mischzähne 23, 24 jeweils materialeinheitlich an dem Statorteil 16 sowie am Rotorteil 19 angeformt sind, so dass der Mischer 100 lediglich aus diesen beiden Komponenten besteht. Der Rotorteil 19 weist einen inneren Bereich auf, welcher als Ausnehmung 29 hohl ausgebildet ist. In die Ausnehmung 29 verlaufen Rastrippen 25 radial nach innen, wobei auf dem Umfang insgesamt acht Rastrippen 25 angeordnet sind. Der Statorteil 16 umfasst eine halbmondförmige Rastkontur 15, welche am Außenumfang vorgesehen ist.

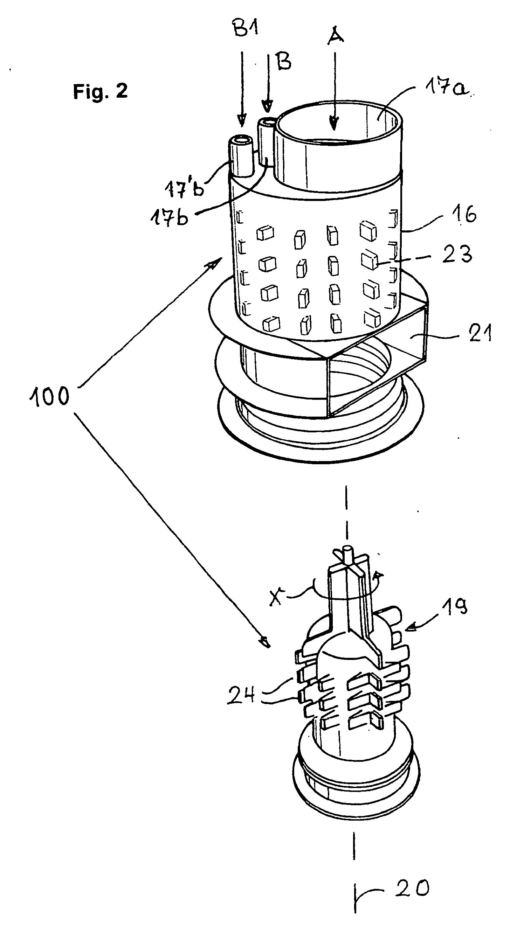

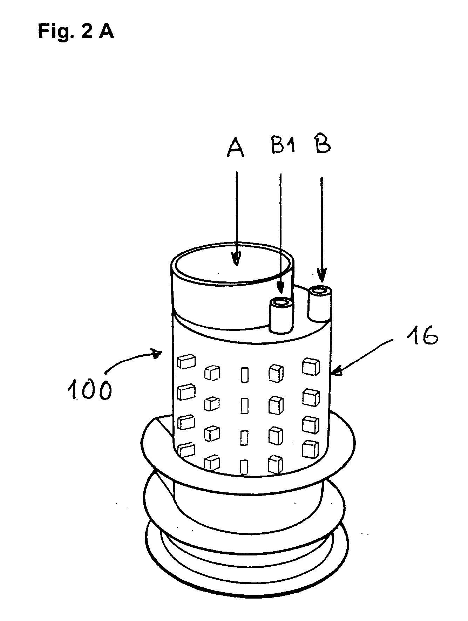

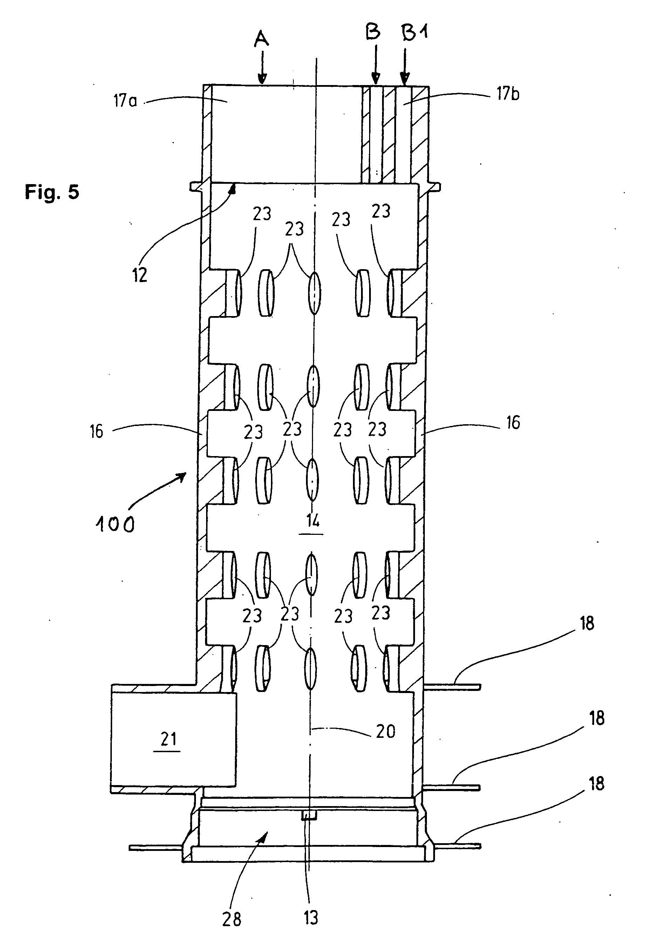

Fig. 5 illustriert einen Querschnitt des Statorteils 16, welcher entlang der Längsachse 20 geschnitten dargestellt ist. Damit sind die Anordnungen der Eintrittsöffnungen 17a, 17b, 17'b im Schnitt dargestellt, welche direkt in die Mischkammer 14 münden. Innenliegend sind in der Wandung des Statorteils 16 die ersten Mischzähne 23 auf den insgesamt fünf Ebenen angeordnet, wobei insgesamt zwölf erste Mischzähne 23 über den Umfang auf jeweils einer Mischzahnebene verteilt vorgesehen sind. Am gegenüberliegend den Eintrittsöffnungen 17a, 17b und 17'b gelegenen Ende der Mischkammer 14 ist eine Abgabeöffnung 21 vorgesehen, welche das Mischgut radial nach außen aus der Mischkammer 14 herausführt (Fig. 2). Am Außenumfang des Statorteils 16 sind tellerförmige Anformungen 18 ausgebildet, wobei insgesamt drei tellerförmige Anformungen 18 auf der Höhe der Abgabeöffnung 21 sowie endseitig am Statorteil 16 vorgesehen sind. Die Eintrittsöffnung 17a bzw. 17b geht auf der Höhe einer Stützlagerfläche 12 in die Mischkammer 14 über, wobei die Stützlagerfläche 12 eine axiale Lagerung des - hier nicht dargestellten - Rotorteils 19 bildet. Der Statorteil 16 ist am hinteren Ende, welches sich gegenüberliegend zu den Eintrittsöffnungen 17a, 17b, 17'b befindet, endseitig geöffnet, so dass der Rotorteil 19 durch diese Öffnung in den Statorteil 16 gefügt werden kann. Im Bereich der Öffnung weist der Statorteil 16 einen als Abschnitt ausgeführten Hohlraum 28 auf, um das Mischgut, welches sich in diesem Bereich hineinbewegt, aufzunehmen. Um das Mischgut gegebenenfalls austreten zu lassen, sind Austrittsöffnungen 13 in der Wandung eingebracht, welche insgesamt zweifach auf dem Umfang angeordnet sind.

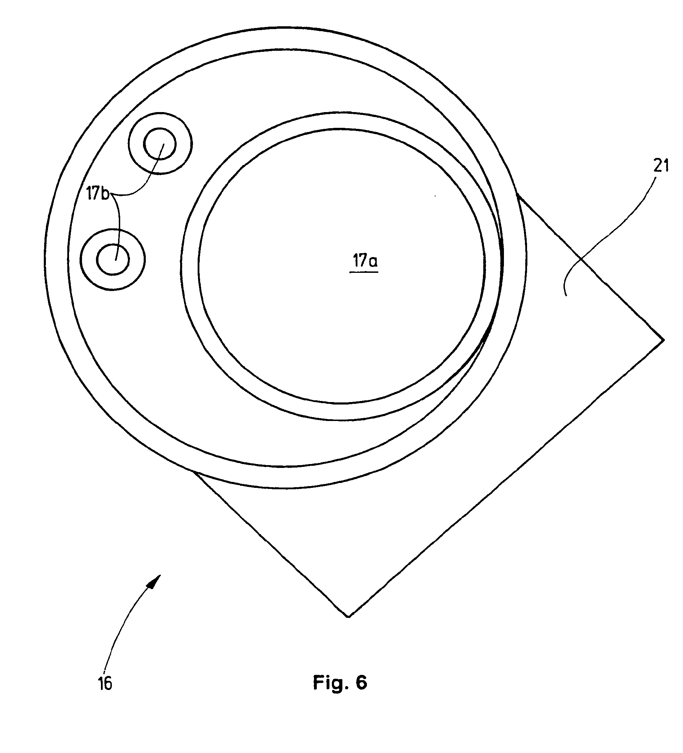

In Fig. 6 ist eine Draufsicht auf den Statorteil 16 gezeigt, welche insbesondere die Anordnung der Eintrittsöffnungen 17a, 17b, 17'b zeigt. Die Eintrittsöffnung 17a ist exzentrisch ausgebildet und weist einen kreisförmigen Querschnitt auf. Neben der Eintrittsöffnung 17a sind zwei Eintrittsöffnungen 17b, 17'b vorgesehen, um eine redundante Zufuhr der Härter-Komponente in die Mischkammer 14 zu ermöglichen. Dabei sind die beiden Eintrittsöffnungen 17b, 17'b zueinander beabstandet ausgebildet und werden über ebenfalls voneinander getrennte Zufuhrleitungen und Dosiereinrichtungen 91, 92 gespeist. Weiterhin ist die Anordnung der Abgabeöffnung 21 dargestellt, welche das Mischgut seitlich aus dem Statorteil 16 hinaus befördert.

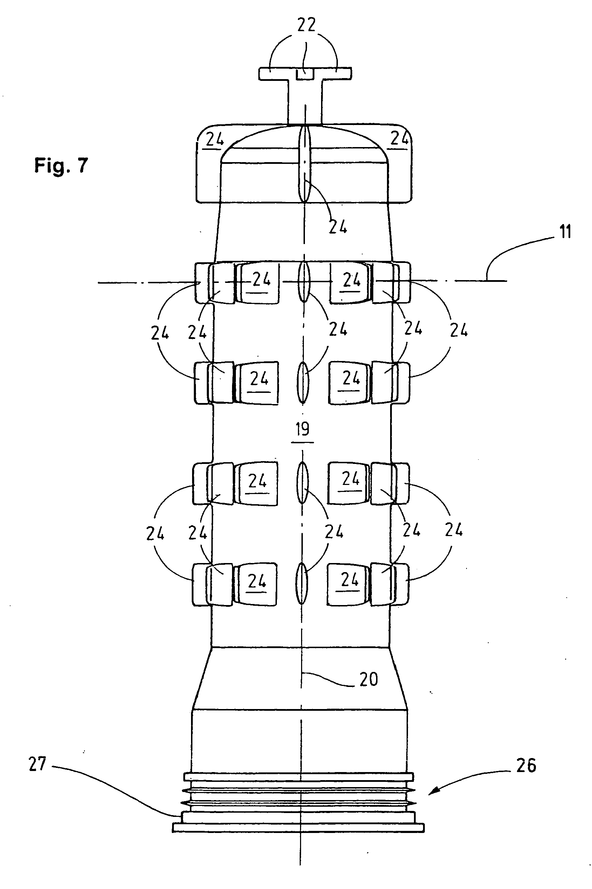

In Fig. 7 ist der Rotorteil 19 dargestellt, wobei insbesondere die zweiten Mischzähne 24 hinsichtlich ihrer Verteilung auf dem Umfang des Rotorteils 19 dargestellt sind. Insgesamt sind zwölf Mischzähne auf einer Mischzahnebene 11 vorgesehen, so dass bei insgesamt vier Mischzahnebenen 11 insgesamt 48 Mischzähne am Rotorteil 19 angeordnet sind. Zuzüglich befinden sich am oberen Teil des Rotorteils 19 vier weitere Mischzähne 24 zur Vorhermischung des Mischgutes. Diese gehen in die Vorsprünge 22 über, welche ebenfalls vierfach an einer Art Verlängerung des Rotorteils 19 angeordnet sind.

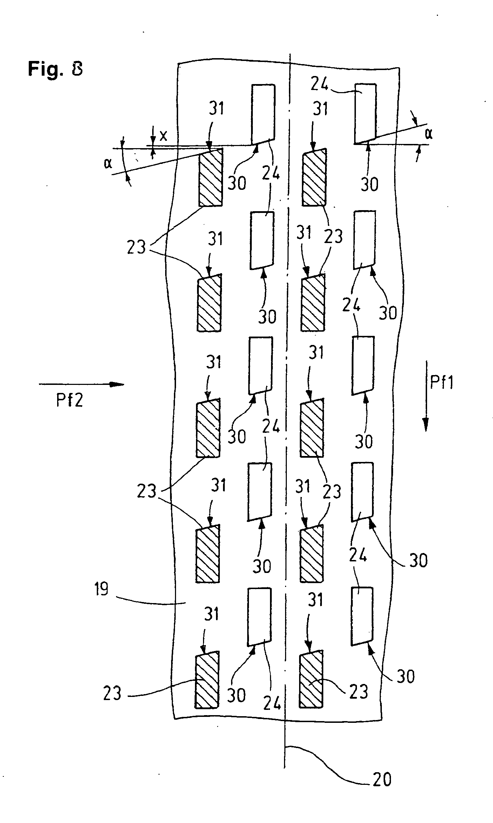

Fig. 8 illustriert einen Teilquerschnitt durch den Mischer 100 entlang der ringförmigen umlaufenden Mischzone, wobei die Mischzähne 23 des Statorteils 16 schraffiert und die Mischzähne 24 des Rotorteils 19 unschraffiert dargestellt sind. Die Mischzähne 23 und 24 der einzelnen Mischzahnebenen sind derart zueinander beabstandet angeordnet, dass die Zähne zueinander Zahnlücken aufweisen. Zwischen den einzelnen Mischzahnebenen weisen die Mischzähne 23, 24 Zwischenräume auf, durch die bei der Rotationsbewegung die am betreffenden Zwischenraum gegenüberliegenden Mischzähne der jeweils anderen Seite hindurch laufen. Durch eine kontinuierliche Zuführung der Komponenten A, B in die Mischkammer 14 kommt es zu einer Teilung des Mischgutstromes, d. h. der Mischgutstrom fließt jeweils an der einen Seite des betreffenden Zahnes 23, 24 und der andere Teil an der anderen Seite des betreffenden Zahnes 23, 24 vorbei. Da diese Teilung in mehreren, der Anzahl der Etagen bzw. Mischzahnebenen entsprechenden Stufen stattfindet, wird das Mischgut intensiv vermischt.

Die Mischzähne 23 weisen Stirnseitenflächen 31 auf, welche den Stirnseitenflächen 30, die an den zweiten Mischzähnen 24 angeformt sind, gegenüberstehen. Bei einer Berührung der Mischzähne 23 und 24 kann somit ein Abgleiten erfolgen, ohne dass Material an den Mischzähnen abgetragen wird. Dies kann insbesondere dann erfolgen, wenn der Rotorteil 19 gegenüber dem Statorteil 16 um einen Betrag x versetzt wird, so dass die Mischzähne 23, 24 aufeinander treffen. Die Stirnseitenflächen 30, 31 sind unter einem Winkel α angeschrägt, wobei der Winkel α vorzugsweise 15° beträgt.

## Patentansprüche

1. Vorrichtung (1) zum Vermischen von zumindest zwei Komponenten, insbesondere von einer Binder-Komponente (A) und einer Härter-Komponente (B), zu einem pastösen oder flüssigen Mischgut, mit zumindest einer Eintrittsöffnung (17a) zur Zufuhr der Binder-Komponente (A) und zumindest einer weiteren Eintrittsöffnung (17b; 17'b) zur Zufuhr der Härter-Komponente (B), sowie mit einer Abgabeöffnung (21) zur Abgabe des Mischgutes, wobei zwischen den Eintrittsöffnungen (17a, 17b) und der Abgabeöffnung (21) ein Mischer (100) mit einer Mischkammer (14) zum Vermischen zumindest zweier Komponenten (A, B) angeordnet ist, wobei die Mischvorrichtung (100) einen Vorratsbehälter (90) für die Binder-Komponente (A) und mindestens einen Vorratsbehälter (91; 92) für die Härter-Komponente (B), für jeden Vorratsbehälter (90, 91; 92) einen Antrieb (93, 94, 95) für die Betätigung einer Einrichtung (90a, 91 a, 92a) oder einer Dosiervorrichtung zum Herausdrücken des Behälterinhaltes,
**dadurch gekennzeichnet,**
**dass** der Mischer (100) einen hohlzylinderartigen Statorteil (16) und einen in diesem konzentrisch um eine Längsachse (20) drehbar aufgenommenen Rotorteil (19) aufweist und die Mischkammer (14) zwischen dem Statorteil (16) und dem Rotorteil (19) ringspaltartig ausgebildet ist, wobei sich mehrere am Statorteil (16) angeformte erste Mischzähne (23) radial nach innen und mehrere am Rotorteil (19) angeformte zweite Mischzähne (24) radial nach außen in die Mischkammer (14) hinein erstrecken, um vermittels einer Rotationsbewegung des Rotorteils (19) im Statorteil (16) die Mischzähne (23, 24) gegeneinander zu bewegen und eine Vermischung der Komponenten (A, B) zu schaffen, wobei der Statorteil (16) mindestens eine, bevorzugterweise zwei mit der Mischkammer (14) verbundene Eintrittsöffnungen (17b, 17'b) für die Härter-Komponente (B) aufweist und wobei die Zuführung der Binder-Komponente (A) und der Härter-Komponente (B) mittels einer Steuereinrichtung zur Mischkammer (14) derart erfolgt, dass vor Beginn eines jeden Mischprozesses vor dem Zulauf der Binder-Komponente (A) bzw. vor Beginn des kontinuierlichen Mischprozesses mit der Drehbewegung der gegeneinander laufenden Mischzähne (23, 24) eine Menge von 0,1 Gramm bis 0,5 Gramm, bevorzugterweise 0,2 Gramm pastöse oder flüssige Härter-Komponente (B) in die Mischkammer (14) eingespritzt wird, woraufhin der Zulauf der Binder-Komponente (A) und der Zulauf der Härter-Komponente (B) erfolgt.

2. Vorrichtung nach Anspruch 1,
**dadurch gekennzeichnet,**
**dass** die ersten Mischzähne (23) auf zumindest einer ersten Mischzahnebene (10) und die zweiten Mischzähne (24) auf zumindest einer zweiten Mischzahnebene (11) angeordnet sind, und die Mischzahnebenen (10, 11) axial in Richtung der Längsachse (20) etagenartig zueinander versetzt sind, sodass die zweiten Mischzähne (24) des Rotorteils (19) in den jeweiligen Zwischenräumen der ersten Mischzähne (23) des Statorteils (16) radial umlaufen.

3. Vorrichtung nach Anspruch 1 oder 2,
**dadurch gekennzeichnet,**
**dass** die Mischzähne (23, 24) jeweils Stirnseitenflächen (30, 31) aufweisen, welche jeweils in Axialrichtung einander zugewandt sind, um diese bei einer axial wirkenden Kraft zwischen dem Statorteil (16) und dem Rotorteil (19) gegeneinander zu positionieren.

4. Vorrichtung nach Anspruch 3,
**dadurch gekennzeichnet,**
**dass** die Stirnseitenflächen (30, 31) in Bezug zu einer normal zur Rotationsachse angeordneten Ebene unter einem Winkel (α) geneigt sind, sodass die Stirnseitenflächen (30, 31) während des Mischvorgangs aufeinander abgleiten, ohne dass von den Mischzähnen (23, 24) Material abträgt und in das Mischgut gelangt.

5. Vorrichtung nach einem der vorgenannten Ansprüche,
**dadurch gekennzeichnet,**
**dass** die Eintrittsöffnungen (17a, 17b) direkt in die Mischkammer (14) münden, wobei die Eintrittsöffnung (17b) zur Zufuhr der Härter-Komponente (B) zweifach vorgesehen ist, um eine redundante Belieferung des Mischgutes mit der Härter-Komponente (B) zu schaffen.

6. Vorrichtung nach einem der vorgenannten Ansprüche,
**dadurch gekennzeichnet,**
**dass** der Rotorteil (19) endseitig Vorsprünge (22) aufweist, welche in die Eintrittsöffnung (17a) zur Zufuhr der Binder-Komponente (A) hineinragen und mit der Rotation des Rotorteils (19) mitrotieren, um die Thixotropie der Binder-Komponente (A) bereits im Zuführkanal der Eintrittsöffnung (17a) zu reduzieren.

7. Vorrichtung nach einem der vorgenannten Ansprüche,
**dadurch gekennzeichnet,**
**dass** der Rotorteil (19) eine endseitig offene, hohlzylinderartige Ausnehmung (29) aufweist, in welche ein Kern geometrieangepasst einsetzbar ist, vermittels dessen der Rotorteil (19) antreibbar ist.

8. Vorrichtung nach Anspruch 7,
**dadurch gekennzeichnet,**
**dass** die Ausnehmung (29) vom Körper des Rotorteils (19) radial nach innen verlaufende Rastrippen (25) aufweist, welche in entsprechende Aussparungen im Kern einrasten, um das Antriebsdrehmoment zum Betrieb der Mischvorrichtung (1) vom rotatorisch angetriebenen Kern auf das Rotorteil (19) zu übertragen.

9. Vorrichtung nach einem der vorgenannten Ansprüche,
**dadurch gekennzeichnet,**
**dass** der Rotorteil (19) Dichtlippen (26) aufweist, um die Mischkammer (14) zwischen dem Rotorteil (19) und dem Statorteil (16) abzudichten und ein Austreten von Mischgut zu verhindern.

10. Vorrichtung nach einem der vorgenannten Ansprüche,
**dadurch gekennzeichnet,**
**dass** der Statorteil (16) zumindest eine tellerförmige Anformung (18) am Außenumfang aufweist, wobei zumindest eine tellerförmige Anformung (18) eine halbmondförmige Rastkontur (15) umfasst, in die beim Einsetzen des Mischers (100) ein Stiftelement eingreift, um die radiale Position der Abgabeöffnung (21) im Statorteil (16) zu sichern.

11. Vorrichtung nach einem der vorgenannten Ansprüche,
**dadurch gekennzeichnet,**
**dass** der Rotorteil (19) einen zylinderförmigen Lagerabschnitt (27) aufweist, um im Statorteil (16) zur radialen Lagerung eine Gleitlageranordnung zu schaffen.

12. Vorrichtung nach einem der vorgenannten Ansprüche,
**dadurch gekennzeichnet,**
**dass** der Statorteil (16) eine Stützlagerfläche (12) umfasst, an welcher der Rotorteil (19) mit den an diesem angeformten Mischzähnen (24) stirnseitig anliegt und abgleitet, um eine axiale Gleitlageranordnung zu schaffen.

13. Vorrichtung nach Anspruch 9 bis 12,
**dadurch gekennzeichnet,**
**dass** zwischen den Dichtlippen (26) ein Hohlraum (28) ausgebildet ist, um ein Auffangen von durch die Dichtlippen (26) hindurchtretendem Mischgut zu ermöglichen.

14. Vorrichtung nach Anspruch 13,
**dadurch gekennzeichnet,**
**dass** der Statorteil (16) im zylindrischen Abschnitt des Hohlraumes (28) umfangsseitig zumindest eine Austrittsöffnung (13) aufweist, um ein Austreten von Mischgut seitens des zylinderförmigen Lagerabschnittes (27) zu verhindern.

15. Vorrichtung nach einem der vorgenannten Ansprüche,
**dadurch gekennzeichnet,**
**dass** zumindest der Statorteil (16) aus einem transparenten Material gebildet ist, wobei das transparente Material aus der Gruppe der Kunststoffe, umfassend ein Polycarbonat (PC), ein Polymethylmetacrylat (PMMA) und /oder ein Styrol/Acrylnitril (SAN), ausgebildet ist.

16. Verfahren zum Vermischen einer Binder- und einer Härter-Komponente unter Verwendung einer Vorrichtung nach einem der Ansprüche 1 bis 15,
**dadurch gekennzeichnet,**
**dass** vor Beginn eines jeden Mischprozesses dass vor dem Zulauf der Binder-Komponente (A) bzw. vor Beginn des kontinuierlichen Mischprozesses mit der Drehbewegung der gegeneinander laufenden Mischzähne (23, 24) des Mischers (100) eine Menge von 0,1 Gramm bis 0,5 Gramm, bevorzugterweise 0,2 Gramm pastöse oder flüssige Härter-Komponente (B) in die Mischkammer (14) eingespritzt wird, und dass nach Beendigung des Einspritzvorganges der Zulauf der Binder-Komponente (A) und der Zulauf der Härter-Komponente (B) erfolgt.

## Claims

1. Mixing device (1) for mixing at least two components, in particular of a binder component (A) and a hardener component (B) to a pasty or liquid mixed material with at least one inlet opening (17a) for the supply of the binder component (A) and at least one further inlet opening (17b; 17'b) for the supply of the hardener component (B) as well as with a delivery opening (21) for delivering the mixed material, whereby a mixer (100) with a mixing chamber (14) is placed between the inlet openings (17a, 17b) and the delivery opening (21) for mixing at least two components (A, B), whereby the mixing device (100) has a storage tank (90) for the binder component (A) and at least one storage tank (91; 92) for the hardener component (B), for each storage tank (90, 91; 92) a drive (93, 94, 95) for the actuation of a device (90a, 91 a, 92a) or of a metering device to press out the content of the tank,
**characterized in**
**that** the mixer (100) has a hollow cylindrical stator part (16) and a rotor part (19) which is received therein rotatable concentrically about a longitudinal axis (20) and the mixing chamber (14) is configured as an annular gap between the stator part (16) and the rotor part (19), whereby several first mixing teeth (23) moulded on the stator part (16) extend radially inwards and several second mixing teeth (24) moulded on the rotor part (19) extend radially outwards into the mixing chamber (14) in order to move the mixing teeth (23, 24) in opposite direction with respect to each other by means of a rotational movement of the rotor part (19) in the stator part (16) and to create a mixing of the components (A, B), whereby the stator part (16) has at least one, preferably two inlet openings (17b, 17'b) for the hardener component (B) connected with the mixing chamber (14) and whereby the supply of the binder component (A) and of the hardener component (B) takes place by means of a control device to the mixing chamber (14) in such a manner that a quantity of 0,1 gram to 0,5 gram, preferably 0,2 gram, pasty or liquid hardener component (B) is injected into the mixing chamber (14) before the beginning of each mixing process before the supply of the binder component (A) or at the beginning of the continuous mixing procedure with the rotational movement of the mixing teeth (23, 24) running in opposite directions, whereafter the supply of the binder component (A) and the supply of the hardener component (B) takes place.

2. Device according to claim 1,
**characterized in**
**that** the first mixing teeth (23) are placed on at least one first mixing teeth plane (10) and the second mixing teeth (24) on at least one second mixing teeth plane (11) and the mixing teeth plane (10, 11) are offset to each other like steps axially in direction of the longitudinal axis (20) so that the second mixing teeth (24) of the rotor part (19) circulate radially in the respective intermediate spaces of the first mixing teeth (23) of the stator part (16).

3. Device according to claim 1 or 2,
**characterized in**
**that** the mixing teeth (23, 24) have respectively front side surfaces (30, 31) which are respectively turned to each other in axial direction in order to position them with respect to each other for an axially acting force between the stator part (16) and the rotor part (19).

4. Device according to claim 3,
**characterized in**
**that** the front side surfaces (30, 31) are inclined with an angle (α) with respect to a plane placed normally to the rotation axis so that the front side surfaces (30, 31) glide onto each other during the mixing operation without material being carried away by the mixing teeth (23, 24) and coming into the mixed material.

5. Device according to any of the preceding claims,
**characterized in**
**that** the inlet openings (17a, 17b) run directly into the mixing chamber (14), whereby the inlet opening (17b) is provided double for the supply of the hardener component (B) in order to create a redundant supply of the mixed material with the hardener component (B).

6. Device according to any of the preceding claims,
**characterized in**
**that** the rotor part (19) has at its ends projections (22) which project into the inlet opening (17a) for the supply of the binder component (A) and which rotate simultaneously with the rotation of the rotor part (19) in order to reduce the thixotropy of the binder component (A) already in the supplying channel.

7. Device according to any of the preceding claims,
**characterized in**
**that** the rotor part (19) has a hollow-type recess (29) open at one end into which a core with an adapted geometry can be fitted by means of which the rotor part can be driven.

8. Device according to claim 7,
**characterized in**
**that** the recess (29) has snap-in ribs (25) extending radially inwards from the body of the rotor part (19) which snap into corresponding recesses in the core in order to transmit the driving torque for operating the mixing device (1) from the rotationally driven core to the rotor part (19).

9. Device according to any of the preceding claims,
**characterized in**
**that** the rotor part (19) has sealing lips (26) in order to seal the mixing chamber (14) between the rotor part (19) and the stator part (16) and to avoid the exit of mixed material.

10. Device according to any of the preceding claims,
**characterized in**
**that** the stator part (16) has at least one plate-shaped moulding (18) on the outer periphery, whereby at least one teller-shaped moulding (18) comprises a half-moon shaped snap-in contour (15) into which a pin element catches when using the mixing device (1) in order to lock the radial position of the delivery opening (21) in the stator part (16).

11. Device according to any of the preceding claims,
**characterized in**
**that** the rotor part (19) has a cylinder-shaped bearing section (27) in order to create a sliding bearing arrangement in the stator part (16) for the radial positioning.

12. Device according to any of the preceding claims,
**characterized in**
**that** the stator part (16) comprises a supporting bearing surface (12) on which the rotor part (19) bears on the front side with the mixing teeth (24) moulded on the rotor part and glides in order to create an axial sliding bearing arrangement.

13. Device according to claim 9 to 12,
**characterized in**
**that** a hollow space (28) is configured between the sealing lips (26) in order to make possible a capture of mixed material which passes through the sealing lips (26).

14. Device according to claim 13,
**characterized in**
**that** the stator part (16) has in the cylindrical section of the hollow space (28) on the periphery at least one outlet opening (13) in order to avoid the exit of mixed material from the cylinder-shaped bearing section (27).

15. Device according to any of the preceding claims,
**characterized in**
**that** at least the stator part (16) is formed of a transparent material, whereby the transparent material is from the group of the synthetic materials comprising a polycarbonate (PC), a polymethylmetacrylate (PMMA) and/or a styrene/acrylonitrile (SAN).

16. Method for mixing a binder component and a hardener component by using a device according to any of the claims 1 to 15,
**characterized in**
**that** a quantity of 0,1 gram to 5 gram, preferably 2 gram, pasty or liquid hardener component (B) is injected into the mixing chamber (14) before the beginning of each mixing process before the supply of the binder component (A) or or at the beginning of the continuous mixing procedure with the rotational movement of the mixing teeth (23, 24) running in opposite directions and that the supply of the binder component (A) and the supply of the hardener component (B) takes place after termination of the injection process.

## Revendications

1. Dispositif (1) pour mélanger au moins deux composants, en particulier un composant liant (A) et un composant durcisseur (B), pour en faire un mélange pâteux ou liquide avec au moins une ouverture d'entrée (17a) pour l'amenée du composant liant (A) et d'au moins une autre ouverture d'entrée (17b; 17'b) pour l'amenée du composant durcisseur (B) ainsi qu'avec une ouverture de sortie (21) pour la sortie du mélange, un mélangeur (100) avec une chambre de mélange (14) pour mélanger au moins deux composants (A, B) étant placée entre les ouvertures d'entrée (17a, 17b) et l'ouverture de sortie (21), le dispositif de mélange (100) comprenant un réservoir de stockage (90) pour le composant liant (A) et au moins un réservoir de stockage (91 ; 92) pour le composant durcisseur (B), un entraînement (93, 94, 95) pour chaque réservoir (90, 91 ; 92) pour l'actionnement d'un dispositif (90a, 91 a, 92a) ou d'un dispositif de dosage pour faire sortir par pression le contenu du réservoir,
**caractérisé en ce**
**que** le mélangeur (1) présente une partie stator de type cylindre creux (16) et une partie rotor (19) logée dans celle-ci rotative concentriquement par rapport à un axe longitudinal (20) et que la chambre de mélange (14) est configurée de type fente annulaire entre la partie stator (16) et la partie rotor (19), plusieurs premières dents de mélange (23) moulées sur la partie stator (16) s'étendant en entrant dans la chambre de mélange (14) radialement vers l'intérieur et plusieurs secondes dents de mélange (24) moulées sur la partie rotor (19) radialement vers l'extérieur pour déplacer les dents de mélange (23, 24) en sens opposé les unes des autres au moyen d'un mouvement de rotation de la partie rotor (19) dans la partie stator (16) et pour créer un mélange des composants (A, B), la partie stator (16) présentant au moins une, de préférence deux ouvertures d'entrée (17b, 17'b) pour le composant durcisseur (B) reliées à la chambre de mélange (14) et l'amenée du composant liant (A) et du composant durcisseur (B) à la chambre de mélange (14) étant effectuée au moyen d'un dispositif de commande de telle manière qu'une quantité de 0,1 gramme à 0,5 gramme, de préférence de 0,2 gramme, de composant durcisseur pâteux ou liquide (B) soit injectée dans la chambre de mélange (14) avant le début de chaque processus de mélange avant l'amenée du composant liant (A) ou avant le début du processus de mélange continu avec le mouvement de rotation des dents de mélange (23, 24) en sens contraire les unes par rapport aux autres, ce après quoi l'amenée du composant liant (A) et l'amenée du composant durcisseur (B) a lieu.

2. Dispositif selon la revendication 1,
**caractérisé en ce**
**que** les premières dents de mélange (23) sont placées sur au moins un premier plan de dents de mélange (10) et que les secondes dents de mélange (24) sont placées sur au moins un second plan de dents de mélange (11) et que les plans des dents de mélange (10, 11) sont décalés à la manière d'étages l'un par rapport à l'autre axialement en direction de l'axe longitudinal (20) si bien que les secondes dents de mélange (24) de la partie rotor (19) circulent radialement dans les espaces intermédiaires respectifs des premières dents de mélange (23) de la partie stator (16).

3. Dispositif selon la revendication 1 ou 2,
**caractérisé en ce**
**que** les dents de mélange (23, 24) présentent respectivement des surfaces de faces frontales (30, 31) qui sont tournées respectivement l'une vers l'autre dans le sens axial pour les positionner en sens inverse pour une force agissant axialement entre la partie stator (16) et la partie rotor (19).

4. Dispositif selon la revendication 3,
**caractérisé en ce**
**que** les surfaces de faces frontales (30, 31) sont inclinées par rapportt à un plan placé verticalement par rapport à l'axe de rotation en formant un angle (α) si bien que le surfaces de faces frontales (30, 31) glissent les unes vers les autres pendant l'opération de mélange sans que de la matière soit déchargée des dents de mélange (23, 24) et arrive dans le mélange.

5. Dispositif selon l'une des revendications précédentes,
**caractérisé en ce**
**que** les ouvertures d'entrée (17a, 17b) aboutissent directement dans la chambre de mélange (14), l'ouverture d'entrée (17b) étant prévue en double pour l'amenée du composant durcisseur (B) pour créer une amenée redondante du mélange avec le composant durcisseur (B).

6. Dispositif selon l'une des revendications précédentes,
**caractérisé en ce**
**que** la partie rotor (19) présente du côté de l'extrémité des saillies (22) qui pénètrent dans l'ouverture d'entrée (18a) pour l'amenée du composant liant (A) et qui tournent avec la rotation de la partie rotor (19) pour réduire la thixotropie du composant liant (A) déjà dans le conduit d'amenée de l'ouverture d'entrée (17a).

7. Dispositif selon l'une des revendications précédentes,
**caractérisé en ce**
**que** la partie rotor (19) présente un évidement de type cylindre creux (29), ouvert à une extrémité, dans lequel un noyau de géométrie adaptée peut être placé au moyen duquel la partie rotor (19) peut être entraînée.

8. Dispositif selon la revendication 7,
**caractérisé en ce**
**que** l'évidement (29) présente des nervures d'enclenchement (25) qui partent radialement du corps de la partie rotor (19), nervures qui s'engrènent dans des évidements correspondants pour transmettre le couple d'entraînement pour le fonctionnement du dispositif de mélange (1) du noyau entraîné en rotation à la partie rotor (19).

9. Dispositif selon l'une des revendications précédentes,
**caractérisé en ce**
**que** la partie rotor (19) a des lèvres d'étanchéité pour étancher la chambre de mélange (14) entre la partie rotor (19) et la partie stator (16) et pour empêcher que du mélange ne sorte.

10. Dispositif selon l'une des revendications précédentes,
**caractérisé en ce**
**que** la partie stator (16) présente au moins un moulage en forme de plateau (18) sur la périphérie extérieure, au moins un moulage en forme de plateau (18) comprenant un contour d'enclenchement en forme de demi-lune (15) dans lequel un élément à broche s'engrène, lorsque le dispositif de mélange (1) est mis en place, pour bloquer la position radiale de l'ouverture de décharge (21) dans la partie stator (16).

11. Dispositif selon l'une des revendications précédentes,
**caractérisé en ce**
**que** la partie rotor (19) présente une section de palier en forme de cylindre (27) pour créer un arrangement de palier à glissement dans la partie stator (16) pour le positionnement radial.

12. Dispositif selon l'une des revendications précédentes,
**caractérisé en ce**
**que** la partie stator (16) comprend une surface de palier d'appui (12) sur laquelle repose la partie rotor (19) avec les dents de mélange moulées sur celle-ci (24) sur le côté de la face frontale pour créer un arrangement de palier à glissement axial.

13. Dispositif de mélange selon les revendications 9 à 12,
**caractérisé en ce**
**qu'**un espace creux (28) est cofniguré entre les lèvres d'étanchéité (26) pour permettre de recueillir du mélange qui passe par les lèvres d'étanchéité (26).

14. Dispositif selon la revendication 13,
**caractérisé en ce**
**que** la partie stator (16) présente sur le côté de la périphérie au moins une ouverture de sortie (13) dans la section cylindrique de l'espace creux (28) pour empêcher la sortie de mélange sur le côté de la section de palier en forme de cylindre (27).

15. Dispositif selon l'une des revendications précédentes,
**caractérisé en ce**
**qu'**au moins la partie stator (16) est formée en un matériau transparent, le matériau transparent étant configuré dans le groupe des matières synthétiques qui comprend un polycarbonate (PC), un polyméthylmétacrylage (PMMA) et/ou un styrène/acrylonitrile (SAN).

16. Procédé pour mélanger un composant liant et un composant durcisseur en utilisant un dispositif selon l'une des revendications 1 à 15,
**caractérisé en ce**
**qu'**une quantité de 0,1 gramme à 0,5 gramme, de préférence de 0,2 gramme, de composant durcisseur pâteux ou liquide (B) soit injectée dans la chambre de mélange (14) avant le début de chaque processus de mélange avant l'amenée du composant liant (A) ou avant le début du processus de mélange continu avec le mouvement de rotation des dents de mélange (23, 24) en sens contraire les unes par rapport aux autres et que l'amenée du composant liant (A) et l'amenée du composant durcisseur (B) a lieu après que l'opération d'injection soit terminée.
